# EUROPEAN PATENT APPLICATION

(11) **EP 2 907 748 A1**
(43) Date of publication of application: **19.08.2015**
(21) Application number: 14275026.4
(22) Date of filing: 17.02.2014
(51) Int. Cl.: B64C 39/02, B64D 1/04, B64D 1/06

(54) **Aircraft or aircraft section comprising a bay, and method of operating the same**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

There is disclosed an aircraft or aircraft section (1) having a bay formed therein, a bay door (3) for closing the bay, and locking means (4) for keeping the bay door in a substantially closed position. The locking means (4) are releasable during flight such that the bay door (3) is free to move between the closed position and an open position, subject to the flight configuration of the aircraft or aircraft section. A method of operating the bay door (3) is also disclosed.

## Description

The following invention relates to an aircraft or aircraft section comprising a bay, and to a method of operating the bay. More particularly, embodiments of the invention comprise a bay door which can be opened and closed under the influence of external conditions, such as gravity or a pressure differential between the interior and exterior of the bay.

Modern aircraft are complex machines able to satisfy diverse sets of mission requirements. As such, they contain a variety of equipment which can add weight. Weight adds cost through fuel so it is therefore desirable to minimise the weight of equipment and the structure of the aircraft whilst maintaining functionality.

Aircraft bays may contain ordnance, the aircraft undercarriage or sensing equipment that is only uncovered when information needs to be collected. These bays are closed by bay doors which maintain the desired external profile of the aircraft in order to maintain aerodynamic properties or a reduced radar cross section. Opening bay doors using mechanical or hydraulic actuators is known. However, the mechanical or hydraulic actuators currently used to open bay doors add weight to the aircraft, and have the further disadvantage of requiring significant equipment for their control and operation, adding further considerable weight to the overall structure of the aircraft.

The present invention seeks to address or at least mitigate the above disadvantages by providing apparatus for operating the bay doors of an aircraft, maintaining aircraft functionality and design properties whilst reducing the weight of the apparatus.

According to a first aspect of the invention there is provided an aircraft or aircraft section having a bay formed therein, a bay door for closing the bay, and locking means for keeping the bay door in a substantially closed position, wherein the locking means are releasable during flight such that the bay door is free to move between the closed position and an open position, subject to the flight configuration of the aircraft or aircraft section. Bay doors operating in this way do not require the heavy actuators that are needed to operate prior known bay doors.

Preferably, the aircraft or aircraft section comprises means configurable to cause a positive pressure differential between the inside and outside of said bay such that said bay door opens.

Preferably, the bay door is pivotally connected to the aircraft or aircraft section.

The bay door may be pivotally connected to the aircraft or aircraft section by a hinge. The hinge may be a dampened hinge.

The bay door may pivot about an axis generally parallel to the normal flight direction of the aircraft

In a further arrangement, the means for keeping the bay door in position comprises at least one latch configurable to secure the door in the open position.

The means for keeping the bay door in position may comprise at least one electromagnet.

The aircraft may be an unmanned air vehicle.

In a further aspect of the invention there is provided a method of operating a bay door in an aircraft having a bay formed therein, comprising locking means for keeping the bay door in a substantially closed position wherein the locking means are releasable during flight, the method comprising the steps of:
a) releasing the locking means, such that the bay door moves to an open position;
b) changing the flight configuration of the aircraft such that the bay door moves to the substantially closed position; and
c) engaging the means for keeping said bay door substantially coincident with the aircraft.

In a further aspect the locking means further comprises at least one latch configurable to secure the door in the open position, and the latch is released prior to the completion of method step b.

An embodiment of the invention will now be described by way of example only and with reference to the accompanying drawings of which:-
Figure 1 shows a cross section of an aircraft section in accordance with the current invention.
Figures 2a, 2b and 2c show a front view of an aircraft section.
Figure 3 shows a cross section of an aircraft section with a bay formed therein and a bay door in a first position.
Figure 4 shows a cross section of an aircraft section with a bay formed therein and a bay door in a second position.
Figures 5a, 5b, 5c and 5d show the method steps used to close the bay door and the vent.

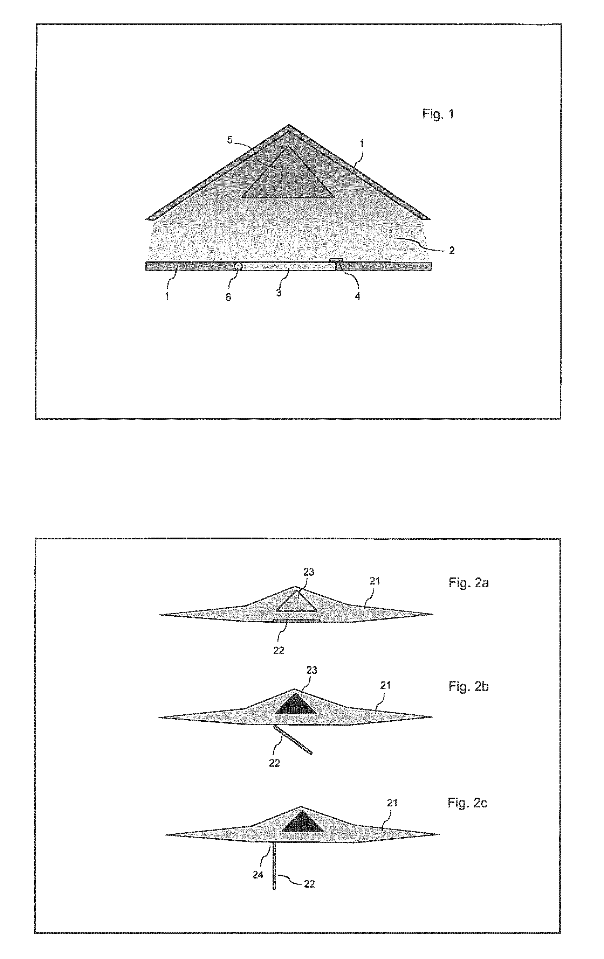

Turning to Figure 1, there is illustrated a cross section of an aircraft 1 which includes a bay 2, a bay door 3 for closing the bay 2, and means 4 for keeping the bay door 3 in place. The bay 2 as illustrated in Figure 1 is shown empty, but the skilled reader will appreciate that, in use, it may contain ordnance or other equipment together with means for housing and/or operating the ordnance or other equipment. Air pressure within the bay 2 can be altered by a vent 5 which allows air to enter or exit the bay and is configured for this purpose. In the embodiment shown in Figure 1 the bay door 3 is configured to move around a pivot 6. Pivot 6 enables the bay door 3 to rotate about an axis that is generally aligned with the direction of flight of the aircraft 1. In the embodiment shown the movement of the bay door is enabled by using a dampened hinge connected to the bay door 3 and the aircraft section 1.

Figures 2a, 2b and 2c show the operation of the present embodiment from a view of the front of the aircraft. Figure 2a shows a front view of the aircraft 21 with bay door 22 which is in a closed position which substantially coincides with the underside of the aircraft 21. In the closed position the bay door 22 maintains the aerodynamic properties and radar cross section of the aircraft 21 as designed. The air pressure within the bay 2 of aircraft 1 can be altered through operation of vent 23, which, in the configuration illustrated in Figure 2a, is held closed by an electromagnet (not shown).

Figure 2b shows the same front view of an aircraft 21 but in this instance the vent 23 has been opened such that the air pressure inside the bay 2 rises. The vent 23 is opened by releasing the electromagnet described above. In the embodiment shown, the increase in air pressure together with the force of gravity results in the bay door 22 opening. In order for the air pressure to increase inside the bay 2, as described above, the aircraft 21 should be moving, preferably in flight.

Figure 2c shows the same front view of an aircraft 21 but in this instance the bay door 22 has moved about a point 24 to an open position which does not coincide with the aircraft 21. In the embodiment shown, the bay door 22 is latched in the second position. The electromagnets used to keep the bay door in the closed position and operate the vent, and the latch mechanism used to keep the bay door in the open position are significantly lighter than the known mechanical and hydraulic actuators for opening bay doors.

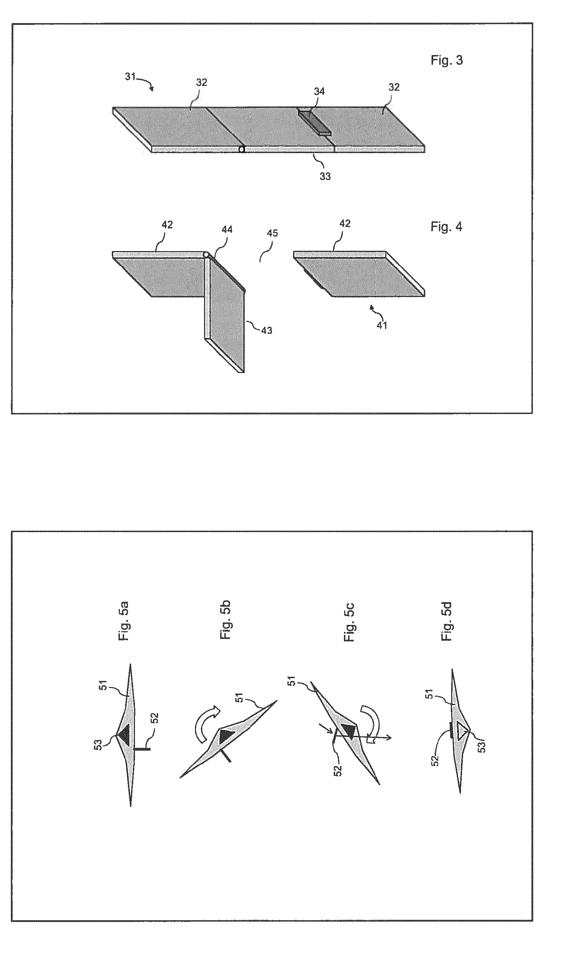

Figure 3 shows a cross section of the aircraft 32 as viewed from within the bay 2 of figure 1. Bay door 33, as illustrated, is in a closed position which substantially coincides with the aircraft section 32. Means 34 for keeping the bay door 33 in position are also illustrated. In the embodiment shown, the means 34 for keeping the bay door 33 in position is an electromagnet which may be controlled by a person in the aircraft, or by a person controlling the aircraft from elsewhere. Alternatively, the electromagnet may be controlled by processing means within the aircraft that are pre-programmed to release the electromagnet when the aircraft reaches a predetermined location, or when a target is detected.

Figure 4 shows a cross section of the aircraft 42 as viewed from outside the bay 2 of figure 1, with bay door 43 in an open position which does not coincide with the aircraft section 42. Bay door 43 is connected to the aircraft by dampened hinge 44. In the illustrated configuration, a gap 45 appears in the aircraft 42, which allows ordnance and/or equipment to be deployed. As shown, the bay door 43 is hinged to the aircraft section 42 by a hinge 44 which is latched in a position which is not coincident with the aircraft section 42.

The method of closing the above-described bay door will now be described. Figure 5a shows a front view of an aircraft 51 with a bay door 52 hinged in an open position which is not coincident with the aircraft, and the vent 53 in the open position. The bay door 52 is latched in an open position to ensure the ordnance or equipment in the bay (not shown) is not obstructed by the bay door 52. Figure 5b shows the aircraft 51 from the same view rolling clockwise, in the direction of the arrow. Figure 5c shows the same aircraft continuing to roll, the latch mechanism is released, such that the bay door is relatively free to pivot about the axis defined by the dampened hinge, and the bay door 52 moving towards a substantially closed position due to the changing flight configuration of the aircraft 51. Figure 5d shows same aircraft 51 with the bay door 52 and the vent 53 substantially closed. Since the movement of the bay door is now relatively free, restricted only by the dampening provided by the hinge, the bay door will move in reaction to the rolling motion of the aircraft, and under the influence of gravity, towards the closed position, as illustrated in Figure 5d, thus completing the process of closing the bay door 52. The electromagnets for keeping the bay door 52 and the vent 53 in the substantially closed position are then engaged, such that the aircraft 51 will be able to roll to its normal flight configuration and continue its flight with the bay door 52 substantially closed.

Whilst the invention has been described in the above with reference to one particular embodiment, it is to be appreciated that variations and modifications to the above-described embodiment are possible, as will be readily apparent to those skilled in the art. For example, there may be provided means for sealing the vent when it is closed in order to make it airtight, or means for sealing between the bay door and the aircraft section for the same reason. Any known method for sealing aircraft bay doors may be used for this purpose, such as providing an overlap between the bay door and the main aircraft skin in which a rubber sealing strip is located.

Moreover, those skilled in the art will recognise that the invention may readily be modified to operate with a bay with two or more bay doors substantially closing the bay. In that case, means for keeping the two or more bay doors in place will be provided. The above-described method of closing the bay doors may be modified to close two or more bay doors if the configuration of the two or more bay doors necessitated a modification to the method. The modification may involve the aircraft rolling clockwise and rolling anticlockwise such that two or more bay doors close.

It will further be appreciated that other means for assisting the opening and closing of the bay door may be provided. For example, a small flap at the front of the bay door may be provided, that can be actuated in flight to create a downwards aerodynamic force on the door in order to affect opening. The actuators required to operate such a small flap would, of course, be significantly smaller than those required to open an entire door.

Whilst, in the above, the invention has been described in application to a whole aircraft, it will be appreciated that, particularly for larger aircraft, the invention may in fact be applied to a single aircraft section that is integrated into the whole aircraft structure at a later point in manufacture.

Whilst, in the above, it has been described to apply a positive pressure differential in order to open the bay door, it will be appreciated that in most flight configurations, gravity alone will be sufficient to open the door once the locking means are released. Thus the skilled reader will appreciate that the application of a positive pressure differential is not essential to the opening of the door, particularly where any aerodynamic forces that may resist the downward opening of the door are likely to be low in comparison to the gravitational force pulling the door downward and open.

Finally, it is also to be understood that the terminology used herein is for the purpose of describing particular embodiments only, and is not intended to be limiting, since the scope of the present invention will be limited only by the appended claims.

## Claims

1. An aircraft or aircraft section having a bay formed therein, a bay door for closing the bay, and locking means for keeping the bay door in a substantially closed position, wherein the locking means are releasable during flight such that the bay door is free to move between the closed position and an open position, subject to the flight configuration of the aircraft or aircraft section.

2. An aircraft or aircraft section according to claim 1 comprising means configurable to cause a positive pressure differential between the inside and outside of said bay such that said bay door opens.

3. An aircraft or aircraft section according to claim 2 wherein the bay door is pivotally connected to the aircraft or aircraft section.

4. An aircraft or aircraft section according to claim 3 wherein the bay door is pivotally connected to the aircraft or aircraft section by a hinge.

5. An aircraft or aircraft section according to claim 4 wherein the hinge is a dampened hinge.

6. An aircraft or aircraft section according to any one of claims 3 to 5 wherein the bay door pivots about an axis generally parallel to the normal flight direction of the aircraft.

7. An aircraft or aircraft section according to any one of the preceding claims wherein the locking means further comprises at least one latch configurable to secure the door in the open position.

8. An aircraft or aircraft section according to any one of the preceding claims wherein the locking means comprises at least one electromagnet.

9. An aircraft or aircraft section according to any one of the preceding claims wherein the aircraft is an unmanned air vehicle.

10. An aircraft substantially as described herein and with reference to the figures.

11. A method of operating a bay door in an aircraft having a bay formed therein, comprising locking means for keeping the bay door in a substantially closed position wherein the locking means are releasable during flight, the method comprising the steps of:
a. releasing the locking means, such that the bay door moves to an open position;
b. changing the flight configuration of the aircraft such that the bay door moves to the substantially closed position; and
c. engaging the locking means for keeping said bay door substantially coincident with the aircraft.

12. A method of operating a bay door in an aircraft, wherein the locking means further comprises at least one latch configurable to secure the door in the open position, and wherein the latch is released prior to the completion of method step b of claim 11.
